# EUROPEAN PATENT SPECIFICATION

(11) **EP 1 505 326 B1**
(45) Date of publication and mention of the grant of the patent: **21.03.2018**
(21) Application number: 04077000.0
(22) Date of filing: 09.07.2004
(51) Int. Cl.: H02G 3/32, F16L 3/00, F16B 45/00

(54) **Hook for bearing cables or hose pipes**
Kabeln- oder Schlauchenhaltehaken
Crochet d'accrochage pour cables ou tuyaux souples

(30) Priority: 15.07.2003 NL 1023932
(43) Date of publication of application: 09.02.2005
(73) Proprietor: Westmark B.V., 3931 ER Woudenberg (NL)
(72) Inventor: Westerbeek van Eerten, Lodewijk F. A., 3818 WB Amersfoort (NL)
(74) Representative: Hooiveld, Arjen Jan Winfried

(56) References cited:
- WO-A2-00/27908
- US-A- 4 117 256
- US-A1- 2003 012 011

## Description

The present invention relates to a hook for bearing cables or hose pipes.

Hooks are well-known and are used on a wide scale for fastening and/or bearing cables or hose pipes such as, for example, electricity cables, welding cables, air hoses, hydraulic hoses or fire hoses. The hooks are useful wherever such cables or hose pipes are used. Examples are the (petro)chemical industry, the offshore industry, the steel and aluminium industry, the ship building industry, oil and gas extraction, the mining industry, the prefabricated construction industry and power stations. Suspending the cables or hose pipes from the wall or the ceiling prevents people tripping over them. Moreover, it reduces the risk of cables or hose pipes becoming damaged, which could result in the leaking of noxious substances or the occurrence of short circuiting, with the consequence of fire hazard.

Although cables and hose pipes can be fastened to the ceiling or to the wall by means of conventional hooks,as in US-A-4117256, the danger of unintentional and undesirable contact still exists, with all the above-mentioned hazards. One can easily bump into such a hook or the cables or hose pipes it carries, at the risk of, for example, head injuries. Moving hooks with wires of cables such as, for example, aboard a ship are extremely dangerous and may cause lethal injuries.

On the one hand, therefore, the conventional hooks contribute to improving safety, while on the other hand they create new safety problems.

The object of the invention is to provide a safe hook.

To this end the hook for bearing cables or hose pipes is in accordance with the invention characterised, in that the hook is made from a plastic, which plastic is a translucent plastic, and which plastic comprises a phosphorescent compound.

The important advantage of the hook according to the invention is that it is exceptionally well visible. In particular, when there is a lack of light such as when the lighting fails, the hook is (and continues to be) visible. The hook according to the invention is much safer than prior art hooks, since its visibility prevents people stumbling over it in the dark or bumping into it (or into the wires or hose pipes carried by the hook), with all the perilous consequences.

Hooks for bearing cables or hose pipes for use in the above-mentioned areas must be capable of bearing heavy cables or hose pipes. They must be capable of bearing, for example, maximally 150-250 kg.

To be able to achieve this, the hook for bearing cables or hose pipes is in accordance with the invention further preferably characterised, in that the translucent plastic is a fibre reinforced plastic, and more preferably a glass-fibre reinforced plastic.

The advantage of a fibre reinforced plastic as the translucent plastic is, that such a fibre reinforced plastic is stronger and therefore has a superior bearing capacity.

As already mentioned, the hook for bearing cables or hose pipes is according to the invention more preferably characterised, in that the translucent plastic is a glass-fibre reinforced plastic. Such a glass-fibre reinforced plastic has the advantage that, in addition to the greater strength, and related to that the superior bearing capacity, it has excellent translucency properties, so that the hook has a greater light output, resulting in a safer hook.

Plastics that are suitable to be used as translucent plastic preferably possess great bearing capacity per unit of weight. They are also preferably heat-resistant and electrically non-conductive.

As described earlier, the plastic from which the hook for bearing cables or hose pipes according to the invention are manufactured, comprises a phosphorescent compound. As already known, phosphorescent compounds can be exited by light of a specific wavelength, after which they continue to emit light for a certain length of time. For application in the present invention, it is preferred if the compound can be exited by light of a wavelength in the visible spectrum (∼400-750 nm) so that the compound can be exited by daylight without a special light source. Obviously, the wavelength of the emitted light must also be in the visible spectrum. Moreover, the emitted light must be sufficiently bright in order to be visible (afterglow light output). The afterglow light output is preferably 5-400 mcd/m². Apart from the light output as such, the emitted light must continue to be visible for a sufficient length of time. That is to say, the afterglow light output should extinguish sufficiently slowly. Preferably this afterglow extinction, which is defined as the time necessary to reduce the afterglow light output to 0,32 mcd/m², takes 50-3000 minutes, and more preferably 1500-3000 minutes. Furthermore, the time necessary to excite the phosphorescent compound is preferably short (approximately 1-60 min.). This affords the advantage that should it be necessary due to the light supply still being a problem after the extinction of the phosphorescent compound, an emergency light source will need to be used for a short period of time only.

If the phosphorescent compound is present in the form of granules, it affords the advantage that it is better miscible with the plastic.

A further object of the present invention is to provide a method for the manufacture of a hook for bearing cables or hose pipes as described above.

To this end the present invention provides a method for the manufacture of a hook for bearing cables or hose pipes as described above, which method is characterised in that in a first step a translucent plastic granulate is mixed with a phosphorescent compound, in a second step the thus formed mixture is at an elevated temperature transferred into a mould, and in a third step the mixture is allowed to cure.

The method of the present invention has the advantage that it can be practised very simply and quickly, making the method very economical. Furthermore, the phosphorescent compound according to the method of the invention is mixed with the plastic. This results in a hook that is a great deal less susceptible to wear than a hook to which the phosphorescent compound has been applied as a coating.

In the second step of the method for the manufacture of the hook according to the present invention, it is preferred for the mixture to be transferred into an injection mould.

Manufacturing the hook according to the present invention by using an injection mould has the advantage that injection moulding is a generally used, efficient technique with which the person skilled in the art is familiar.

In the method for the manufacture of a hook according to the present invention it is further preferred for a fibre reinforced plastic to be used as the translucent plastic. The translucent plastic is preferably a glass-fibre reinforced plastic.

Owing to the use of a fibre reinforced plastic the manufactured hook will advantageously be very strong, and will therefore possess superior bearing capacity.

In addition to the hook manufactured by using a fibre reinforced plastic being very strong, it will advantageously also have excellent translucence properties, so that a greater light output can be obtained.

It is further preferred in the first step of the method for the manufacture of a hook according to the present invention, to add the phosphorescent compound in the form of granules.

The use of the phosphorescent compound will advantageously result in the manufacture of a hook endowed with a good light output, making it well visible in the dark for a sufficient length of time.

The addition of the phosphorescent compound in the form of granules further makes the compound easily miscible with the plastic, which is advantageous.

The invention will now be further elucidated by way of the appended drawing of an exemplary embodiment of a hook according to the present invention.

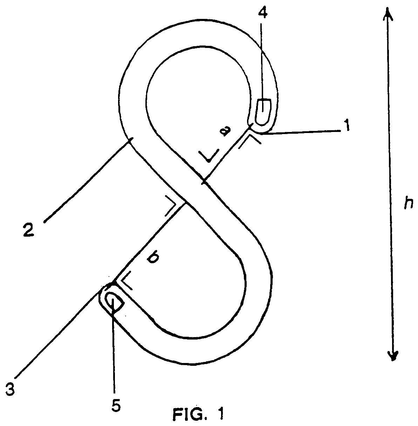

The hook illustrated in Figure 1 comprises a first spherical end 1 and a second spherical end 3, which spherical ends are connected with each other by an S-shaped body 2. The first spherical end 1 is optionally provided with an opening 4. The second spherical end 3 is optionally provided with an opening 5. With the aid of these openings the hook may be secured, for example, with plastic binders. The height h of the hook may vary from 5 to 75 cm. The ratio a:b (a is the perpendicular from the spherical end 3 to the S-shaped body, and b is the perpendicular of the spherical end 1 to the S-shaped body) is 1:2.

The disclosed embodiments of the present invention are preferred embodiments that serve to illustrate the present invention. Obviously, the person skilled in the art is able to make many changes and modifications, all falling within the protective scope of the appended claims.

For example, it is possible to manufacture a hook as, for example, illustrated in Figure 1 in a different manner than by applying the above described method. As alternative one could in a fist step mix a monomer or prepolymer mixture with a phosphorescent compound to subsequently, in a second step, transfer this mixture to a mould where, in a third step, one could allow it to polymerise, so as to provide a solid hook.

## Claims

1. A hook for bearing cables or hose pipes, said hook being made from a plastic, **characterised in that** said plastic is a translucent plastic and comprises a phosphorescent compound.

2. A hook according to claim 1, **characterised in that** the translucent plastic is a fibre reinforced plastic.

3. A hook according to claim 1 or 2, **characterised in that** the translucent plastic is glass-fibre reinforced plastic.

4. A hook according to one of the preceding claims, **characterised in that** the phosphorescent compound is present in the form of granules.

5. A method for the manufacture of a hook according to one of the preceding claims, **characterised in that**
- in a first step a translucent plastic granulate is mixed with a phosphorescent compound,
- in a second step the thus formed mixture is at an elevated temperature transferred into a mould,
- in a third step the mixture is allowed to cure.

6. A method according to claim 5, **characterised in that** in the second step the mixture is transferred into an injection mould.

7. A method according to claim 5 or 6, **characterised in that** the translucent plastic is glass-fibre reinforced plastic.

8. A method according to one of the claims 5-7, **characterised in that** the translucent plastic is glass-fibre reinforced plastic.

9. A method according to one of the claims 5-8, **characterised in that** in the first step the phosphorescent compound is added in the form of granules.

## Patentansprüche

1. Haken zum Halten von Kabeln oder Schlauchleitungen,
wobei der Haken aus einem Kunststoff hergestellt ist, **dadurch gekennzeichnet, dass** der Kunststoff ein lichtdurchlässiger Kunststoff ist und eine phosphoreszierende Komponente aufweist.

2. Haken nach Anspruch 1, **dadurch gekennzeichnet, dass** der lichtdurchlässige Kunststoff ein faserverstärkter Kunststoff ist.

3. Haken nach Anspruch 1 oder 2, **dadurch gekennzeichnet, dass** der lichtdurchlässige Kunststoff ein glasfaserverstärkter Kunststoff ist

4. Haken nach einem der vorhergehenden Ansprüche, **dadurch gekennzeichnet, dass** die phosphoreszierende Komponente in der Form von Granulat vorhanden ist.

5. Verfahren zur Herstellung eines Hakens nach einem der vorhergehenden Ansprüche, **dadurch gekennzeichnet, dass**
in einem ersten Schritt ein lichtdurchlässiges Kunststoffgranulat mit einer phosphoreszierenden Komponente vermischt wird,
in einem zweiten Schritt die auf diese Weise gebildete Mischung auf einer erhöhten Temperatur ist und in eine Form überführt wird,
in einem dritten Schritt zugelassen wird, dass die Mischung härtet.

6. Verfahren nach Anspruch 5, **dadurch gekennzeichnet, dass** in dem zweiten Schritt die Mischung in eine Spritzgussform überführt wird.

7. Verfahren nach Anspruch 5 oder 6, **dadurch gekennzeichnet, dass** der lichtdurchlässige Kunststoff ein glasfaserverstärkter Kunststoff ist.

8. Verfahren nach einem der Ansprüche 5 - 7, **dadurch gekennzeichnet, dass** der lichtdurchlässige Kunststoff ein glasfaserverstärkter Kunststoff ist.

9. Verfahren nach einem der Ansprüche 5 - 8, **dadurch gekennzeichnet, dass** in dem ersten Schritt die phosphoreszierende Komponente in der Form von Granulat zugefügt wird.

## Revendications

1. Crochet destiné à supporter des câbles ou tuyaux souples,
ledit crochet étant réalisé en une matière plastique **caractérisé en ce que** ladite matière plastique est une matière plastique translucide et comprend un composé phosphorescent.

2. Crochet selon la revendication 1, **caractérisé en ce que** la matière plastique translucide est une matière plastique renforcée par des fibres.

3. Crochet selon la revendication 1 ou 2, **caractérisé en ce que** la matière plastique translucide est une matière plastique renforcée par des fibres de verre.

4. Crochet selon l'une des revendications précédentes, **caractérisé en ce que** le composé phosphorescent est présent sous la forme de granules.

5. Procédé de fabrication d'un crochet selon l'une des revendications précédentes, **caractérisé en ce que**
dans une première étape, un granulé de matière plastique translucide est mélangé à un composé phosphorescent,
dans une deuxième étape, le mélange ainsi formé est transféré à une température élevée dans un moule,
dans une troisième étape le mélange est amené à durcir.

6. Procédé selon la revendication 5, **caractérisé en ce que** dans la deuxième étape, le mélange est transféré dans un moule d'injection.

7. Procédé selon la revendication 5 ou 6, **caractérisé en ce que** la matière plastique translucide est une matière plastique renforcée par des fibres de verre.

8. Procédé selon l'une des revendications 5 à 7, **caractérisé en ce que** la matière plastique translucide est une matière plastique renforcée par des fibres de verre.

9. Procédé selon l'une des revendications 5 à 8, **caractérisé en ce que**, dans la première étape, le composé phosphorescent est ajouté sous la forme de granules.
